Europäisches Patentamt

European Patent Office

Office européen des brevets

(19)

(11) Numéro de publication: **0 256 916**
**B1**

(12) **FASCICULE DE BREVET EUROPEEN**

(45) Date de publication du fascicule du brevet:
02.11.89

(51) Int. Cl.⁴: **B64C 27/46**

(21) Numéro de dépôt: **87401748.6**

(22) Date de dépôt: **27.07.87**

(54) **Pale en matériaux composites, à structure bilongeron et bicaisson, et à revêtements stratifiés à sandwich de nid d'abeilles, et son procédé de fabrication.**

(30) Priorité: **28.07.86 FR 8610882**

(43) Date de publication de la demande:
**24.02.88 Bulletin 88/8**

(45) Mention de la délivrance du brevet:
**02.11.89 Bulletin 89/44**

(84) Etats contractants désignés:
**DE ES GB IT NL**

(56) Documents cités:
**EP-A- 0 187 590**
**FR-A- 1 154 586**
**FR-A- 2 381 662**
**US-A- 4 316 700**
**US-A- 4 407 635**

(73) Titulaire: **AEROSPATIALE Société Nationale Industrielle, 37, Boulevard de Montmorency, F-75016 Paris(FR)**

(72) Inventeur: **Bost, Michel, 33, avenue des Platanes, F-94340 Joinville-Le-Pont(FR)**

(74) Mandataire: **Lepeudry-Gautherat, Thérèse et al, ARMENGAUD JEUNE CABINET LEPEUDRY 6, rue du Fg. St-Honoré, F-75008 Paris(FR)**

## Description

La présente invention concerne une pale en matériaux composites pour rotor d'aérodyne à voilure tournante, et l'invention se rapporte plus précisément à une pale destinée à l'équipement des rotors d'hélicoptères en particulier à usage militaire, et dont la structure bilongeron, s'étendant sur toute l'envergure de la pale, et bicaisson de torsion et de flexion, s'étendant sur toute la corde de la pale, ainsi que des revêtements stratifiés à sandwich de nid d'abeilles, procurent une caractéristique de préservation de la sécurité après avarie (caractéristique dite "fail-safe").

On connaît déjà de nombreuses réalisations de pales en matériaux composites pour rotors d'hélicoptères, dont la structure a été particulièrement aménagée pour résister aux sollicitations de torsion et de flexion, et pour être redondante, afin de permettre de conserver l'intégrité de fonctionnement après un endommagement structural.

En général, la structure de ces pales connues comprend un longeron principal de bord d'attaque, en stratifils de fibres à haute résistance mécanique agglomérés par une résine synthétique polymérisée, éventuellement doublé par un ou plusieurs autres longerons auxiliaires, de même constitution, et soit un unique caisson au voisinage du bord d'attaque, intégrant le longeron principal et un ou plusieurs éventuels longerons auxiliaires, soit un caisson multiple s'étendant selon la corde ou selon l'épaisseur de la pale, et intégrant tous les longerons, et le ou chaque caisson de ces pales d'une part renferme un noyau de remplissage travaillant, constitué d'un bloc d'une matière alvéolaire ou cellulaire de densité moyenne, telle qu'une mousse, ou d'un bloc en nid d'abeilles, et, d'autre part, est enveloppé, au moins partiellement, par la peau de la pale constituée en général d'un empilage d'au moins deux couches de tissu de fibres agglomérées par une résine synthétique polymérisée, et dont les fibres sont éventuellement orientées selon des directions différentes, de préférence croisées, et inclinées sur l'axe longitudinal de la pale correspondante. Dans le cas d'une structure à caisson unique de bord d'attaque, la partie arrière de la pale comprend un ou plusieurs blocs de remplissage, adjacent(s) au caisson avant et en arrière de ce dernier, et éventuellement adjacents les uns aux autres selon l'envergure de la pale, et ce ou ces blocs de remplissage, directement enveloppé(s) par la peau de la pale, est ou sont constitué(s) soit en une matière alvéolaire ou cellulaire, par exemple à cellules fermées telle qu'une mousse synthétique, soit en nid d'abeilles. Dans tous les cas, le principal des avantages recherchés est une très grande rigidité en torsion, permettant notamment d'éliminer les vibrations résultant d'un couplage entre les déformations en flexion et en torsion de la pale.

A titre d'exemple, le brevet français 2 381 662 de la Demanderesse qui divulgue les caractéristiques des préambules des revendications 1 et 17, a pour objet une pale en matériaux composites à caisson de torsion avant constitué d'un longeron de bord d'attaque s'étendant sur toute l'envergure de la pale et formé d'une seule pièce, en écheveaux de stratifils de fibres de verre, présentant une section transversale pleine sensiblement en forme de D légèrement aplati, d'un noyau plein en un matériau alvéolaire léger et juxtaposé entièrement à toute la face arrière du longeron, et d'une nappe entourant le longeron et le noyau et faite d'au moins une couche de tissu en fibres parallèles de verre, disposées en biais par rapport à l'axe longitudinal de la pale, cette nappe ayant une épaisseur importante, notamment supérieure à celle du revêtement ou peau de la pale, qui enveloppe le caisson avant ainsi qu'un élément de remplissage arrière, également en un matériau alvéolaire léger et juxtaposé contre la nervure transversale et centrale formée par la face arrière du caisson, c'est-à-dire par la partie de la nappe périphérique qui recouvre la face arrière du noyau du caisson, ce dernier s'étendant, le long de la corde de la section transversale de la pale, sur environ la moitié avant du profil de la pale, dont il épouse la forme extérieure.

D'autres réalisations similaires sont connues, dans lesquelles l'élément de remplissage arrière est un bloc de nid d'abeilles.

A titre de second exemple, le brevet français n° 84 19 432 (EP-A 0 187 590) de la Demanderesse décrit une pale à structure multilongeron et bicaisson, dont l'ossature résistante, voisine du bord d'attaque de la pale, est conformée en deux caissons superposés dans le sens de l'épaisseur de la pale, dont chacun s'étend sur toute l'envergure de la pale et est constitué d'un longeron avant et d'un longeron arrière formés chacun d'un faisceau de stratifils de fibres agglomérées par une résine, d'un noyau de remplissage en matériau léger disposé entre ces deux longerons, et d'une enveloppe renfermant les deux longerons et le noyau, et comprenant au moins une couche de tissu en fibres parallèles disposées en biais par rapport à l'axe longitudinal de la pale, les deux caissons étant solidaires par polymérisation simultanée des parties superposées et jointives de leurs enveloppes, en formant une semelle médiane, tandis qu'un élément de remplissage alvéolaire léger est disposé à l'arrière des deux caissons et qu'un revêtement extérieur enveloppe les deux caissons et l'élément de remplissage arrière.

Les inconvénients de ces réalisations connues, dont les noyaux du ou des caissons et/ou les éléments de remplissage arrière sont des blocs en nid d'abeilles, sont leur complexité de fabrication et leur coût, car leur fabrication nécessite de grandes précisions et précautions d'usinage et des tolérances serrées, afin que les blocs de nid d'abeilles présentent des surfaces supérieure et inférieure qui soient en tous points "parallèles" au profil de la pale souhaitée, tout en assurant un serrage convenable des blocs en nid d'abeilles par leur revêtement, car un serrage trop important entraîne un écrasement des mailles ou cellules hexagonales du réseau en nid d'abeilles, tandis qu'un serrage insuffisant a pour conséquence des décolle ments entre le revêtement et le remplissage et/ou des défauts de surface. La réalisation parfaite de l'usinage nécessaire des blocs de nid d'abeilles est d'autant plus compliquée que les pales modernes présentent des profils évolutifs selon l'envergure, voire effilés. Un autre inconvénient de ces réalisations connues est que les noyaux ou éléments de remplissage en nid d'abeilles ne permettent pas d'assurer une contre-pression interne suffisante, lors du moulage de la pale, car leur raideur est pratiquement nulle dans le sens de la corde de la pale. Il est donc impossible de fabriquer, en une seule opération de moulage, une pale munie d'un longeron économique, du type constitué d'écheveaux de stratifils de fibres à haute résistance mécanique imprégnés de résine polymérisable, et qui est conformé lors de la polymérisation de la résine, au cours du moulage, grâce à la présence d'un remplissage et/ou d'un noyau exerçant une contre-pression vis-à-vis de la pression de moulage assurée par la fermeture des demi-moules. De même, il est impossible de fabriquer, en une seule opération de moulage, une pale à bicaisson, comportant donc une nervure centrale, ou pis encore, une pale multi-caisson, avec plusieurs nervures, car cette ou ces nervures doit ou doivent également être conformée(s) avec l'assistance d'une contre-pression suffisante assurée par un noyau et/ou un élément de remplissage.

Ces inconvénients ne se retrouvent pas sur les réalisations connues dont les noyaux du ou des caissons et/ou le ou les éléments de remplissage arrière sont en une matière alvéolaire ou cellulaire légère, telle qu'une mousse, car une telle matière assure bien un rôle de mandrin ou d'outillage interne de conformation, donnant une contrepression interne lors du moulage, ce qui procure la possibilité de fabriquer des pales dont la structure interne peut etre complexe, en une seule opération de moulage. L'intérêt de cet avantage est essentiel pour concevoir une pale économique. De plus, du fait de sa souplesse, une telle matière alvéolaire, semblable à une mousse, nécessite un usinage bien moins précis que les nids d'abeilles, donc bien moins coûteux, et une surépaisseur suffisante des blocs de mousse préfabriqués permet d'éviter tout défaut de surface.

Par contre, ces réalisations connues à noyau de caissons et/ou éléments de remplissage arrière en matière alvéolaire ou cellulaire telle qu'une mousse ont des inconvénients qui leur sont propres, notamment en cas de chocs ou d'impacts sur les pales. Ces chocs ou impacts provoquent des déformations du revêtement et du remplissage de la pale, et ces déformations sont à l'origine de phénomènes d'arrachement sur la périphérie des impacts, ce qui se traduit par des décollements importants qui ne s'arrêtent, en cas de chocs violents, qu'après être parvenus à un élément résistant, tel que le bord de fuite de la pale ou un bord ou une aile d'un longeron, et ceci quel que soit le mode de liaison du revêtement au remplissage ou noyau en mousse (interface par film de colle ou en résine autocollante ou non), car la rupture se produit toujours dans la mousse. En effet, c'est la nature même de ces matériaux alvéolaires qui ne leur permet pas de supporter et transmettre des charges d'arrachement, contrairement aux nids d'abeilles qui supportent bien ce type de contraintes, du fait de la bonne liaison obtenue au niveau de chaque maille ou cellule des réseaux hexagonaux avec les revetements, au moyen de films de colle.

Par ailleurs, les réalisations connues de pales à revêtements stratifiés minces, constitués par un simple empilement de quelques couches de tissu de fibres et dont les noyaux de caisson et/ou éléments de remplissage arrière sont en matériaux alvéolaires ou en blocs de nids d'abeilles ont pour inconvénients communs que ces pales sont nécessairement dépendantes, notamment vis-à-vis des chocs et impacts, de la stabilisation apportée par les noyaux et/ou les éléments de remplissage, et qu'en cas d'endommagement consé cutif à un choc ou à un impact d'un projectile, la réparation nécessite le remplacement localisé du matériau du noyau ou du remplissage sur la totalité de l'épaisseur du profil de la pale. En effet, que ce matériau soit alvéolaire ou en nid d'abeilles, en cas de perforation d'un revêtement simple ou peau mince de la pale, il faut actuellement éliminer toute la zone endommagée et, pour être certain de retrouver un remplissage sain, il faut assurer le remplacement du remplissage endommagé jusqu'à l'autre face du revêtement pour éviter d'avoir à effectuer la jonction de la pièce rapportée avec le remplissage en place, au milieu du profil de la pale. De plus, en cas de choc ou d'impact en vol, le revêtement ou la peau mince devient souple et flottant après sa décohésion du remplissage, en particulier en mousse, et peut rapidement, par l'effet conjugué des contraintes, vibrations, pressions et dépressions aérodynamiques, se criquer et s'arracher, en présentant un risque réel.

Au titre de l'état de la technique, on peut également citer le brevet français 1 154 586, qui décrit une pale dont le revêtement de la partie arrière est constitué de deux panneaux intercalaires à parois métalliques interne et externe, entre lesquelles est disposé un remplissage léger, en nid d'abeilles ou autre matériau de remplissage léger. Mais cette pale présente une partie avant et une partie arrière qui sont pratiquement creuses, la partie avant comprenant essentiellement un longeron de bord d'attaque métallique et laminé, de section en C, constitué d'un grand nombre de couches de minces feuilles métalliques alternant avec des couches d'un matériau adhésif, et une plaque de longeron vertical, fermant la partie arrière du longeron, tandis que la partie arrière de la pale comprend des éléments raidisseurs sous la forme des panneaux intercalaires supérieur et inférieur mentionnés ci-dessus. Les liaisons entre le longeron et la plaque de longeron et entre cette dernière et les parois des panneaux intercalaires sont assurées par des équerres laminées, et les panneaux intercalaires, profilés avec des rayons de coubure particuliers et amincis à l'avant comme à l'arrière, comportent éventuellement des inserts en couches denses, laminées et en échelons, entre les parois des panneaux qui sont telles que la paroi interne de l'un des panneaux s'étend vers le bord de fuite jusqu'à rencontrer la paroi externe de l'autre panneau, ou que les parois externes des panneaux s'étendent jusqu'au bord de fuite tandis que leurs parois internes se rencontrent en avant du bord de fuite pour former une jointure, avec, dans tous les cas, au moins une pièce profilée en coin relativement rigide pour assurer, à l'arrière, la jonction des deux panneaux de revêtement. Les inconvénients de cette réalisation sont liés à la nature métallique de l'ossature résistante et de la peau de la pale, ainsi qu'à la complexité de sa structure, et donc à la complexité et au coût de sa fabrication, du fait notamment de la nécessité d'usiner les éléments de remplissage des panneaux lorsqu'ils sont réalisés en nid d'abeilles. De plus, la pièce en coin du bord de fuite, indispensable à la tenue de la pale et nécessaire dans cette réalisation pour augmenter la rigidité de traînée, et qui est également un organe travaillant reprenant une partie de l'effort centrifuge, est un facteur de vulnérabilité de la pale, car un seul impact direct sur cette pièce peut entraîner sa rupture.

Le but de l'invention est de proposer une pale en matériaux composites qui remédie aux inconvénients des pales de ce type connues dans l'état de la technique, à revêtement simple et mince et à noyaux de caisson et/ou éléments de remplissage en matériaux alvéolaires ou cellulaires ou en nids d'abeilles, en ce qui concerne la vulnérabilité aux chocs et impacts et la facilité de réparation en cas d'endommagement, l'aptitude de la structure à résister aux charges en utilisation et à pouvoir etre fabriquée aisément et à un coût économique à l'aide de moyens simples, et de préférence en une seule opération de moulage.

A cet effet, la pale en matériaux composites selon l'invention, du type comportant:

un caisson de torsion et de flexion avant, s'étendant sensiblement sur la moitié avant de la pale et délimité par

un longeron avant, disposé le long du bord d'attaque de la pale sur toute son envergure, et constitué d'au moins un faisceau de stratifils de fibres à haute résistance mécanique agglomérés par une résine synthétique polymérisée,

une nervure centrale et transversale, disposée sensiblement selon l'épaisseur de la pale de manière à relier sensiblement son extrados à son intrados, dans la partie moyenne de la corde de la pale, et qui s'étend sur toute l'envergure de cette dernière, des parties avant de revêtement d'extrados et d'intrados, qui raccordent le longeron avant à la nervure transversale de manière à fermer le caisson avant, et

un noyau de remplissage du caisson avant, en une matière alvéolaire, et

un élément arrière de remplissage, également en une matière alvéolaire, adjacent à la nervure transversale, et s'étendant de celle-ci jusqu'à proximité du bord de fuite de la pale et sur toute l'envergure de cette dernière, en présentant une forme en coin profilée à la forme de la moitié arrière de la pale, se caractérise en ce qu'elle comprend de plus:

un longeron central, s'étendant également sur toute l'envergure de la pale, et comprenant une semelle ou aile d'extrados et une semelle ou aile d'intrados, constituées chacune d'au moins un faisceau de stratifils de fibres à haute résistance mécanique agglomérés par une résine synthétique polymérise, intégrées respectivement au revêtement d'extrados et au revêtement d'intrados, et solidaires respectivement de l'extrémité supérieure et de l'extrémité inférieure de la nervure centrale, l'une d'un côté et l'autre de l'autre côté du plan moyen de cette nervure, de sorte que le longeron central présente une section en forme de Z, dont les ailes d'extrémité sont formées par les semelles de stratifils, et dont l'âme est formée par la nervure centrale et transversale,

un caisson arrière de torsion et de flexion s'étendant sensiblement sur la moitié arrière de la pale, et délimité entre:

le longeron central, et

des parties arrière de revêtement d'extrados et d'intrados, qui sont disposées dans le prolongement vers l'arrière des parties de revêtement fermant le caisson avant et qui sont solidarisées le long du bord de fuite de la pale de manière à fermer le caisson arrière autour d'un noyau de remplissage constitué par l'élément arrière de remplissage,

lesdites parties avant et arrière des revêtements d'extrados et d'intrados présentant chacune une structure de coque stratifiée comportant une âme constituée d'un panneau d'épaisseur constante en nid d'abeilles, prise en sandwich entre deux nappes travaillantes auxquelles le panneau en nid d'abeilles est solidarisé par collage, et constituées chacune d'un empilement d'au moins deux couches de tissu de fibres à haute résistance mécanique agglomérées par une résine synthétique polymérisée, l'une des deux nappes étant une nappe interne adjacente au noyau correspondant et l'autre une nappe externe formant la peau de la pale, et

les deux noyaux de remplissage formant des mandrins de conformation interne non travaillants, constitués en une matière alvéolaire très légère.

La pale ainsi réalisée comporte une structure bicaisson et bilongeron de préservation de la sécurité en cas d'avarie (caractère "fail-safe"),dont tous les organes principaux résistants sont redondants: d'une part les deux caissons de torsion et de flexion sont juxtaposés à l'avant et à l'arrière de la nervure centrale, et s'étendent sur la totalité de la corde la pale, et, d'autre part, l'ensemble longeron est doublé en continu sur toute l'envergure de la pale, ce qui procure un caractère "fail-safe" complémentaire du fait de la répartition des longerons en différentes zones de la section de la pale, et plus particulièrement, de la présence d'un longeron principal massif au bord d'attaque et des deux semelles du longeron central placées à l'arrière du caisson avant, et intimement liées à la structure de la pale, d'une part aux revêtements d'extrados et d'intrados et, d'autre part, aux extrémités de la nervure centrale et transversale, dans la partie moyenne de la corde.

La pale ainsi réalisée comporte de plus des revêtements de sécurité et stabilisés, qui offrent une excellente tenue aux chocs et impacts, grâce à l'utilisation d'une âme en nid d'abeilles prise en sandwich entre deux nappes travaillantes constituées de couches équilibrées de tissu de fibres : en effet, pour une masse donnée de revêtement, une réalisation à sandwich de nid d'abeilles présente une rigidité très importante du fait de la distance séparant les deux nappes latérales du revêtement, ce qui apporte une grande sécurité en cas de choc en vol. Dans ce cas, le revêtement en sandwich conservera son rôle structural, même après un décollement entre la nappe interne de revêtement et la matière alvéolaire sous-jacente du noyau correspondant, du fait de la rupture qui se produira préférentiellement dans cette matière alvéolaire, à ce niveau, ce qui est une raison du choix d'une telle matière telle qu'une mousse pour remplir les caissons. Pour un même choc, le décollement sera moins important sur une pale à revêtement en sandwich que sur une pale à revêtement simple et remplissage en mousse, et la réparation en sera ainsi d'autant facilitée. La destruction d'une nappe externe de revêtement par exemple n'entraînera pas la perte totale de la raideur en torsion de ce revêtement, car la nappe de revêtement interne restera intacte, ce qui facilitera également la réparation d'une perforation éventuelle d'une nappe de revêtement externe, et la limitera le plus souvent à la pose d'un empiècement au niveau de l'épaisseur du sandwich. Pour ces raisons, la constitution des revêtements de pale en sandwich de nids d'abeilles procure des peaux de pale stabilisées, qui se suffisent à elles-mêmes en cas d'impact, et ramènent la matière alvéolaire des noyaux , assurant une fonction d'amortisseur sous chaque revêtement travaillant (nappe externe de revêtement, panneau en nid d'abeilles, nappe interne de revêtement), à un rôle de simple mandrin interne lors du moulage de la pale. En effet, l'utilisation de noyaux en matière alvéolaire telle qu'une mousse permet de développer une contre-pression interne convenable lors du moulage, ce qui assure une bonne conformation des longerons en stratifils. Du fait que les noyaux de remplissage des caissons avant et arrière n'assurent essentiellement qu'un rôle de mandrin de conformation pour la fabrication et ne participent que très faiblement à la résistance générale de la pale, ils peuvent être réalisés partir à de pains préfabriqués en une mousse très légère, ce qui permet d'obtenir un ensemble formé des revêtements stratifiés et du noyau de remplissage en matière alvéolaire qui a une masse linéïque (exprimée en kg par mètre linéaire de pale) plus faible que pour une pale à revêtement mince et simple dans laquelle la matière alvéolaire de remplissage est une matière travaillante de densité plus élevée.

En résumé, la pale selon l'invention permet de réunir les avantages et propriétés de chacun des matériaux que sont les nids d'abeilles et les mousses, utilisées séparément dans les réalisations connues, tout en conservant un caractère économique à la pale selon l'invention, et ceci d'autant plus que les panneaux de nids d'abeilles des revêtements ne nécessitent aucun usinage, car ils sont utilisés directement en bande d'épaisseur constante après une simple découpe à la largeur convenable. L'utilisation combinée selon l'invention de nids d'abeilles et de matière alvéolaire de type mousse permet de bénéficier de la facilité de réalisation des pales à remplissage et/ou à noyaux en mousse tout en conservant les qualités, en utilisation, des pales à noyaux et/ou remplissage en nids d'abeilles dont la fabrication est très complexe.

Avantageusement, afin d'améliorer d'une part la liaison des revêtements au longeron avant et, d'autre part, la participation du noyau avant à la conformation du longeron avant, ce dernier présente une section sensiblement en forme de C, dont les deux extrémités libres sont en butée contre le bord avant des panneaux en nids d'abeilles des parties avant des revêtements d'extrados et d'intrados, tandis que les nappes internes desdites parties avant de ces revêtements sont solidarisées, par leur portion d'extrémité avant, contre les faces internes des extrémités du longeron avant en C, entre lesdites faces internes et le noyau de remplissage avant, qui remplit l'évidement du longeron avant en C, et les nappes externes desdites parties avant de ces revêtements sont solidarisées par leur portion d'extrémité avant contre la face externe du longeron avant qu'elles recouvrent au moins partiellement.

De préférence, afin de permettre le centrage de la section transversale de la pale sensiblement au quart avant de la corde, sans nuire à la cohésion d'ensemble de la pale, le longeron avant en C présente, dans sa partie directement adjacente au bord d'attaque, un évidement longitudinal logeant un contrepoids en matériau à densité élevée, lequel est recouvert par les portions avant des nappes externes des parties avant des revêtements d'extrados et d'intrados de la pale, qui se rejoignent au niveau du bord d'attaque.

De même, il est préférable que le bord d'attaque de la pale soit protégé par une coiffe, et, dans ce cas, le longeron avant présente, sur l'avant de sa face externe, un redan dans lequel est logée ladite coiffe de protection du bord d'attaque, les nappes externes des parties avant des revêtements d'extrados et d'intrados étant alors pincées par leur portion d'extrémité avant dans le redan du longeron avant, entre ce dernier et la coiffe.

Si les revêtements d'extrados et d'intrados ne sont pas continus, la pale peut se présenter sous la forme d'un caisson principal avant stabilisé, intégrant le longeron avant et le longeron central, et sur l'arrière duquel se rapporte un bord de fuite léger, constitué seulement des parties arrière des revêtements d'intrados et d'extrados ainsi que du noyau arrière. Mais, avantageusement, pour permettre une fabrication économique en une seule étape de moulage, la nappe externe de chacun des revêtements d'extrados et d'intrados s'étend, de manière continue, du bord d'attaque de la pale à son bord de fuite en recouvrant la face externe de la semelle correspondante du longeron central, ainsi que la face externe d'un panneau avant et d'un panneau arrière en nid d'abeilles du revêtement correspondant, qui s'étendent respectivement du longeron avant à la semelle correspondante, et de cette dernière jusqu'à proximité du bord de fuite de la pale, et la nappe interne de chacun desdits revêtements s'étend de manière également continue du longeron avant au bord de fuite de la pale en recouvrant la face interne de la semelle correspondante du longeron central, ainsi que la face interne desdits panneaux avant et arrière en nid d'abeilles du revêtement correspondant.

De plus, afin de bénéficier pour la nervure centrale formant l'âme du longeron central des mêmes avantages que ceux procurés par les revêtements de la pale, il est avantageux que cette âme du longeron central présente une structure en coque stratifiée constituée d'un autre panneau d'épaisseur constante en nid d'abeilles pris en sandwich entre deux nappes latérales auxquelles le remplissage en nid d'abeilles est solidarisée par collage et qui sont constituées chacune d'au moins une couche d'un tissu de fibres agglomérées par une résine synthétique polymérisée.

La fixation des extrémités de cette âme aux semelles du longeron central est simplifiée si, de plus, les deux nappes latérales de ladite âme se prolongent au-delà des extrémités supérieure et inférieure de son remplissage en nid d'abeilles de manière à former deux ailes s'étendant l'une d'un côté et l'autre de l'autre côté du plan moyen de ladite âme en nid d'abeilles et solidarisées contre lesdites nappes internes des revêtements d'extrados et d'intrados formant lesdites semelles du longeron central.

Dans une forme préférée de réalisation, l'âme du longeron central est légèrement inclinée de l'avant vers l'arrière et de l'extrados vers l'intrados, et les semelles d'extrados et d'intrados s'étendent respectivement vers l'avant et vers l'arrière de ladite âme.

Les fibres des différentes couches des nappes des revêtements peuvent être de même nature, par exemple uniquement des fibres de verre, mais toutes les combinaisons de matériaux - verre, fibres aramides telles que celles commercialisées sous le nom de marque de KEVLAR, carbone, etc - et d'orientations des fibres sont possibles. Cependant, dans la pale selon l'invention, il est avantageux d'optimiser les performances des nappes de revêtement par le choix de couches de tissu de fibres de natures différentes, les couches jugées comme étant les plus vitales, par exemple celles comportant les fibres les plus résistantes, et, en général simultanément, les plus fragiles aux chocs, étant disposées vers l'intérieur du revêtement correspondant, ce qui permet de les protéger également d'autres aléas, tels que les rayures, du fait de la présence d'au moins une couche externe en surface, par exemple en fibres de verre. Pour les hélicoptères à usage militaire, on évitera l'utilisation des fibres de carbone qui sont défavorables à l'obtention d'une faible signature radar.

S'il est nécessaire d'augmenter la raideur en traînée de la pale, il est avantageux de prévoir de plus deux bandes de renforcement du bord de fuite, qui s'étendent sensiblement sur le tiers arrière de la pale et sont réalisées en matériaux armés de fibres à haute résistance mécanique en nappes ou en tissu, et qui sont disposées chacune entre des portions arrière en regard de la nappe externe de l'un des revêtements, d'un côté, et, de l'autre côté, de la face externe du panneau en nid d'abeilles arrière et de la nappe interne du revêtement correspondant, de sorte que les nappes externes et les bandes de renforcement des revêtements d'extrados et d'intrados forment, dans leur portion d'extrémité arrière, une languette de bord de fuite, tandis que les nappes internes desdits revêtements sont solidarisées, dans leur portion d'extrémité arrière, contre l'intérieur des bandes de renforcement. Ces bandes de renforcement, qui peuvent être constituées de tous matériau en bandes renforcé de fibres de verre, carbone, aramides ou autres, permettent de supprimer l'arêtier de bord de fuite rapporté sur la plupart des pales connues, et dont les inconvénients de fragilité sont bien connus. Cependant, comme il est nécessaire d'assurer la liaison entre les nappes internes des revêtements d'extrados et d'intrados, dans leur portion d'extrémité arrière, voisine du bord de fuite, la liaison entre ces nappes est assurée par un cavalier de bord de fuite formé d'un coin de mousse enserré dans une nervure de section en C solidarisée par sa face externe contre l'intérieur des nappes internes de revêtement.

Dans une forme préférée de réalisation de la pale selon l'invention, les longerons avant et central sont cons titués de stratifils de verre unidirectionnels orientés selon l'envergure de la pale, chaque nappe latérale de l'âme du longeron central est constituée d'un empilement de trois couches de tissu de fibres de verre dont les fibres sont orientées à ± 45° par rapport à l'axe longitudinal de la pale, et chaque nappe interne ou externe de chaque revêtement d'extrados ou d'intrados comprend une couche externe, par rapport au revêtement correspondant, de tissu de fibres de verre dont les fibres sont orientées selon l'axe longitudinal de la pale et perpendiculairement à cet axe, chaque nappe interne et chaque nappe externe comprenant de plus respectivement deux et trois couches internes par rapport au revêtement correspondant, de tissu de fibres aramides ou de carbone dont les fibres sont orientées à ± 45°, par rapport à l'axe longitudinal de la pale. Les couches de fibres à ± 45° procurent essentiellement la raideur en torsion des semelles et de l'âme du longeron central, tandis que les couches de fibres longitudinales et perpendiculaires à cet axe longitudinal procurent essentiellement la raideur en battement et en traînée de ces éléments. De même, pour obtenir des bandes de renforcement peu vulnérables, chacune de ces dernières est avantageusement constituée de deux ou trois couches superposées de tissu dissymétrique de fibres de verre ou de carbone, dont 90 % des fibres sont orientées selon l'axe longitudinal de la pale et 10 % des fibres perpendiculairement à cet axe. Enfin, un cavalier de bord de fuite compatible est avantageusement constitué par la superposition de deux couches de tissu de fibres de verre dont les fibres sont orientées selon l'axe de la pale et perpendiculairement à cet axe.

L'invention a également pour objet un procédé de fabrication d'une pale à revêtements d'extrados et d'intrados continus, telle que définie ci-dessus, et qui comprend essentiellement une seule opération de moulage, garantissant ainsi l'intégrité du produit fini, seuls les noyaux avant et arrière et l'âme du longeron central étant des composants préfabriqués, les premiers par usinage de pains d'une mousse très légère, et la dernière par empilage de ses éléments constitutifs et conformation des ailes d'extrémité, puis par polymérisation en pièce simple.

Un tel procédé de fabrication en une seule opération de moulage est connu par le brevet français 2 381 662 précité, et consiste à effectuer l'assemblage des différents éléments constitutifs de la pale et la polymérisation des résines qui les imprègnent au cours de l'unique opération de moulage, dans un moule unique comprenant deux demi-moules rigides, dont la forme intérieure de chacun est adaptée à la forme de la moitié correspondante du profil de la pale, compte tenu de ses variations de forme, d'épaisseur, de corde et du vrillage selon son envergure, le demi-moule supérieur étant verrouillé sur le demi-moule inférieur après mise en place successivement des différents éléments constitutifs correspondants, et le moule ainsi garni étant ensuite placé dans une étuve pour un cycle de polymérisation classique, par exemple d'une durée de 2 heures à une température d'environ 120°C.

Le procédé selon l'invention se distingue du procédé connu par la nature et la succession particulières des éléments mis en place dans les deux demi-moules, et il se caractérise en ce que l'ordre de mise en place des éléments est le même dans les deux demi-moules, seuls le contrepoids, les noyaux avant et arrière, l'âme du longeron central et le cavalier de bord de fuite étant placés dans le demi-moule inférieur, et le procédé consiste à mettre successivement en place dans chacun des demi-moules,

la nappe externe du revêtement correspondant, en disposant d'abord dans le fond du demi-moule la ou les couches de tissu de fibres imprégnées de résine polymérisable dont les fibres sont les moins fragiles aux chocs, lorsque la nappe externe comporte des tissus de fibres de natures différentes,

des écheveaux de stratifils imprégnés de résine polymérisable, formant l'une de deux moitiés complémentaires du longeron avant, et, dans le demi-moule inférieur, le contrepoids à l'avant desdits écheveaux dans ce demi-moule,

des écheveaux de stratifils imprégnés de résine polymérisable, et formant la semelle correspondante, du longeron central,

une bande de renforcement du bord de fuite, sur le tiers arrière de la nappe externe,

le panneau avant et le panneau arrière de nid d'abeilles du revêtement correspondant, disposés sur la nappe externe le premier entre le demi-longeron avant et la semelle correspondante du longeron central et le second derrière cette dernière, vers le bord de fuite, après avoir appliqué un film de colle de part et d'autre des deux panneaux, et

la nappe interne du revêtement correspondant, en disposant d'abord dans le demi-moule correspondant la ou les couches de tissus de fibres imprégnées de résine polymérisable dont les fibres sont les plus fragiles aux chocs, lorsque la nappe interne comporte des tissus de fibres de natures différentes, puis

à mettre en place, dans le demi-moule inférieur, le noyau avant,

- la nervure centrale, formant l'âme du longeron central,
- le noyau arrière, et
- le cavalier de bord de fuite avant que de retourner le demi-moule supérieur garni sur le demi-moule inférieur garni et de fermer le moule pour effectuer la polymérisation.

L'invention sera mieux comprise, et d'autres avantages et caractéristiques de l'invention ressortiront à la lecture de la description qui suit d'un exemple particulier de réalisation présenté à titre non limitatif en référence aux dessins annexés sur lesquels:

la figure 1 est une vue en coupe transversale de la pale, dans sa partie courante, et selon la direction de sa corde,

la figure 2 est une vue schématique représentant la mise en place des éléments constitutifs de la pale dans le demi-moule inférieur, et

la figure 3 est une vue schématique représentant le demi-moule supérieur garni, retourné au-dessus du demi-moule inférieur garni, avant la fermeture du moule pour la polymérisation.

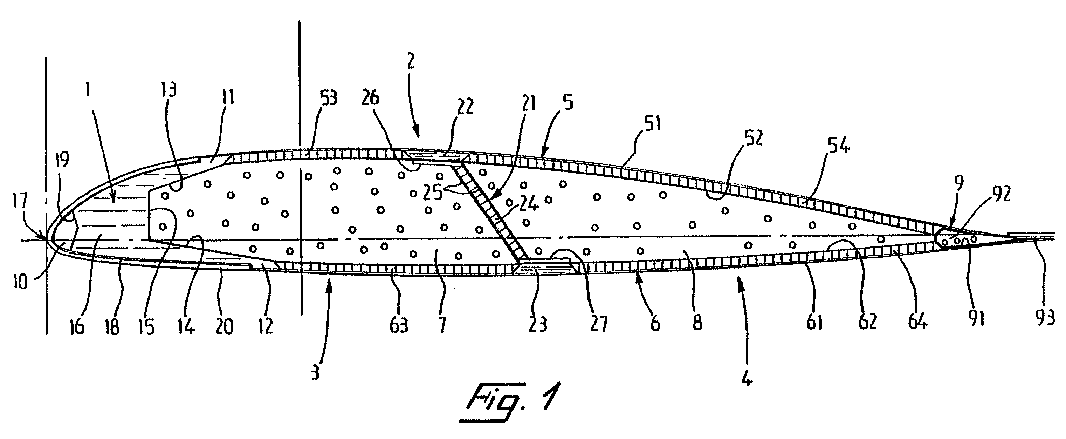

Sur la figure 1, on a représenté, en coupe transversale selon sa corde, une section de pale en matériaux composites ayant, à titre d'exemple, un profil moderne dissymétrique de 600 mm de corde, et comprenant essentiellement une structure bilongeron, s'étendant sur toute l'envergure de la pale et constituée du longeron avant 1 et du longeron central 2, et bicaisson, s'étendant non seulement sur toute l'envergure mais également sur toute la corde de la pale et constituée d'un caisson avant 3 et d'un caisson arrière 4, qui sont délimités, dans le sens de la corde, respectivement entre les deux longerons 1 et 2 et à l'arrière du longeron central 2, ainsi que des revêtements stratifiés d'extrados 5 et d'intrados 6, qui coopèrent avec les longerons 1 et 2 pour fermer les caissons 3 et 4 respectivement autour des noyaux de remplissage avant 7 et arrière 8, le caisson arrière 4 étant fermé, à son extrémité arrière, par un cavalier de bord de fuite 9, qui assure la jonction, à ce niveau, entre les deux revêtements 5 et 6, sur toute l'envergure de la pale. Enfin, un contrepoids 10 d'équilibrage de la pale est monté à l'avant du longeron avant 1.

Le longeron avant 1 est constitué d'écheveaux de stratifils de verre unidirectionnels et longitudinaux (s'étendant sensiblement parallèlement à l'axe longitudinal de la pale selon l'envergure de celle-ci), qui sont agglomérés par une résine synthétique polymérisée, par exemple une résine époxyde. Le longeron 1 présente une section en C. L'aile supérieure 11 et l'aile inférieure 12 (plus longue que l'aile supérieure 11) du longeron 1 en C, qui sont effilées à leur extrémité arrière, sont sensiblement divergentes l'une par rapport à l'autre et délimitées par des faces internes planes 13 et 14, raccordées l'une à l'autre par une face interne verticale 15 de la partie centrale 16 du C, et par la face externe du longeron 1 qui est recourbée au profil de la partie avant de la pale, de part et d'autre du bord d'attaque 17. Sur la majeure partie de sa surface externe et d'une aile 11 à l'autre 12, le longeron 1 présente un évidement en redan 18, de profondeur constante, et la pointe avant du longeron 1 est découpée en logement en V 19, dans lequel est logé et retenu le contrepoids 10, par exemple en métal lourd d'une densité supérieure à 17, assurant le centrage de la section de la pale sensiblement au quart avant de la corde (centre de gravité à 25 % de la corde à partir de l'avant du bord d'attaque 17). La face avant du contrepoids 10 prolonge le profil du longeron 1 à fond de redan 18, de sorte qu'une coiffe 20 de protection du bord d'attaque, par exemple en acier inoxydable d'environ 1 mm d'épaisseur, est collée dans le redan 18 et par-dessus le contrepoids 10.

Le longeron central 2 comprend une âme (nervure) transversale 21, qui est préfabriquée et polymérisée en pièce isolée, et qui traverse sensiblement l'épaisseur de la pale dans la partie centrale de la corde, en étant légèrement inclinée de l'avant vers l'arrière et de l'extrados vers l'intrados, ainsi que deux semelles 22 et 23, dont l'une 22 est intégrée au revêtement d'extrados 5 et liée par ce dernier, comme expliqué ci-dessous, à l'extrémité supérieure de l'âme 21, tandis que l'autre semelle 23 est intégrée au revêtement d'intrados 6 et lié de manière analogue à l'extrémité inférieure de l'âme 21.

L'âme 21 est un élément en coque s'étendant sur toute l'envergure de la pale et dont le remplissage 24 est constitué d'un panneau plat en nid d'abeilles stratifié d'une épaisseur constante de 5 mm, du type commercialisé sous le nom de marque de NOMEX, ayant des mailles de 3 mm et un poids volumique de 29 kg/m³, et ce remplissage 24 est collé entre deux nappes latérales identiques 25. Chaque nappe latérale 25 est constituée par la superposition de trois couches de tissu de verre, agglomérées par une résine synthétique polymérisée et disposées de sorte que leurs fibres soient orientées à ± 45° par rapport à l'axe longitudinal de la pale. Les deux nappes latérales 25 s'étendent au-delà des bords supérieur et inférieur du remplissage 24 sur des longueurs sensiblement égales et sont appliquées l'une contre l'autre sur ces longueurs de manière à former une aile supérieure 26 et une aile inférieure 27 qui sont repliées respectivement vers l'avant et vers l'arrière du plan moyen de remplissage 24, de sorte que l'âme 21 présente une section en forme de Z.

Chacune des deux semelles 22 et 23 est constituée, comme le longeron avant 1, d'écheveaux de stratifils de verre unidirectionnels et longitudinaux agglomérés par une résine synthétique polymérisée, et chacune présente une section de forme trapézoïdale, à grande base tournée vers l'extérieur du profil et à petite base tournée vers l'intérieur du profil et en regard de l'aile 26 ou 27 correspondante de l'âme 21, dont la semelle 22 ou 23 n'est séparée que par l'épaisseur de la nappe interne du revêtement d'extrados 5 ou d'intrados 6 correspondant, comme expliqué ci-dessous.

Le revêtement d'extrados stratifié 5 comprend une nappe externe 51, une nappe interne 52 et deux panneaux d'épaisseur constante en nid d'abeilles, de même nature que celui du remplissage 24 de l'âme 21, et qui sont pris en sandwich entre les nappes externe 51 et interne 52, à chacune desquelles chaque panneau est solidarisé par un film de colle, l'un des deux panneaux étant un panneau avant 53, en butée par son extrémité avant contre l'extrémité arrière de l'aile supérieure 11 du longeron avant 1 et par son extrémité arrière contre la face avant de la semelle 22, l'autre panneau étant un panneau arrière 54, en butée par son extrémité avant contre la face arrière de la même semelle d'extrados 22 et par son extrémité arrière contre le cavalier de bord de fuite 9. La nappe externe 51 du revêtement 5 est constituée par l'empilement d'une couche externe de tissu de verre, à fibres orientées selon l'axe longitudinal de la pale et perpendiculairement à cet axe, et de trois couches internes de tissu de fibres aramides et à fibres orientées à ± 45° par rapport à l'axe longitudinal de la pale, les quatre couches étant agglomérées par une résine synthétique d'imprégnation polymérisée. Cette nappe externe 51 s'étend de manière continue du bord d'attaque 17 au bord de fuite en étant solidarisée entre la coiffe 20 et le longeron avant 1, puis sur le panneau avant 53, la grande base externe de la semelle 22, le panneau arrière 54 et le cavalier de bord de fuite 9. La nappe interne 52 du revêtement 5 est constituée par l'empilement d'une couche externe, par rapport au revêtement 5, donc vers l'intérieur du profil de la pale, qui est en tissu de verre à fibres orientées selon l'axe longitudinal de la pale et perpendiculairement à cet axe, et de deux couches internes (vers l'intérieur du revêtement 5) de tissu de fibres aramides à fibres orientées à ± 45° par rapport à l'axe longitudinal de la pale, ces trois couches étant agglomérées par une résine synthétique polymérisée. Cette nappe interne 52 est solidarisée par sa portion d'extrémité avant contre la face interne 13 de l'aile supérieure 11 du longeron avant 1, puis contre la face interne du panneau avant 53, entre la petite base interne de la semelle 22 et l'aile supérieure 26 de l'âme 21, contre la face interne du panneau arrière 54 et enfin entre la face supérieure du cavalier 9 et la portion d'extrémité arrière de la nappe externe 51.

De manière analogue, le revêtement d'intrados stratifié 6 comprend une nappe externe 61 et une nappe interne 62, de même constitution respectivement que les nappes externe 51 et interne 52, ainsi que deux panneaux d'épaisseur constante de nid d'abeilles 63 et 64, de même nature que les panneaux 53, 54 et 24, et qui sont pris en sandwich entre les nappes 61 et 62, l'un des panneaux étant un panneau avant 63 en butée par son extrémité avant contre l'extrémité arrière de l'aile inférieure 12 du longeron avant 1 et par son extrémité arrière contre la face avant de la semelle d'intrados 23, et l'autre étant un panneau arrière 64 en butée par son extrémité avant contre la face arrière de la semelle 23 et par son extrémité arrière contre le cavalier 9. La nappe externe 61 s'étend également de manière continue du bord d'attaque 17 (où elle est jointive avec l'extrémité avant de la nappe externe 51 du revêtement d'extrados 5) jusqu'au bord de fuite, en étant solidarisée entre la coiffe 20 et le longeron avant 1 puis contre le panneau avant 63, la grande base externe de la semelle 23, le panneau arrière 63 et le cavalier 9. La nappe interne 62 est solidarisée par sa portion d'extrémité avant contre la face interne 14 de l'aile inférieure 12 du longeron avant 1, puis contre la face interne du panneau avant 63, entre la petite base interne de la semelle 23 et l'aile intérieure 27 de l' âme 21, contre la face interne du panneau arrière 64 et enfin entre la face inférieure du cavalier 9 et la portion d'extrémité arrière de la nappe externe 61.

Les noyaux de remplissage avant 7 et arrière 8 des caissons respectivement avant 3 et arrière 4 sont usinés à la forme des volumes internes délimités entre les deux longerons 1 et 2 et les parties avant des revêtements 5 et 6, limitées aux panneaux avant 53 et 63 pour le noyau avant 7, et entre le longeron 2 et le cavalier 9 et les parties arrière de revêtement 5 et 6, limitées aux panneaux arrière 54 et 64, pour le noyau arrière 8, et ces noyaux sont usinés dans des pains préfabriqués d'une mousse de polyuréthanne rigide de très faible densité.

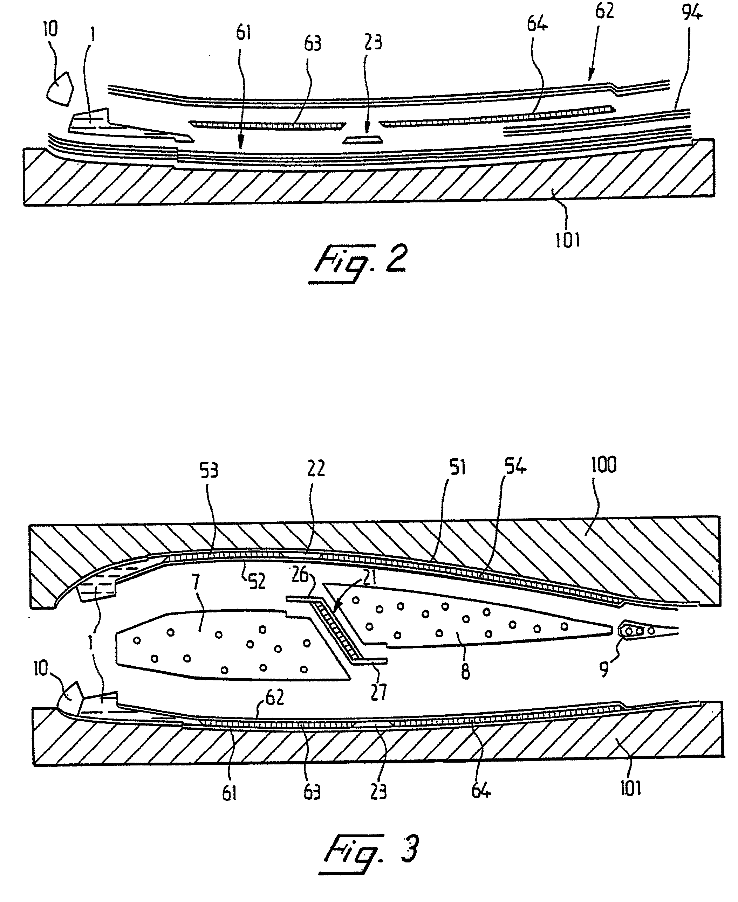

Le cavalier de bord de fuite 9 est constitué d'une nervure en C 91 formée par l'empilement de deux couches de tissu de verre dont les fibres agglomérées par une résine synthétique polymérisée sont orientées selon l'axe longitudinal de la pale et perpendiculairement à cet axe, ainsi que d'un coin 92 en mousse de polyuréthanne rigide, qui est enserré dans la nervure en C91, refermée sur elle-même et dont les surfaces externes inférieure et supérieure sont liées respectivement aux portions d'extrémité arrière des nappes internes 62 et externe 61 du revêtement d'intrados 6 et aux portions d'extrémité arrière des nappes interne 52 et externe 51 du revêtement d'extrados 5, les deux nappes externes 51 et 61 se prolongeant au-delà de l'extrémité arrière du cavalier 9 pour former une languette de bord de fuite 93. Pour augmenter la rigidité de trainée de la pale, une bande de renforcement du bord de fuite est avantageusement disposée sur le tiers arrière de la corde, entre chaque nappe externe 51 ou 61, vers l'extérieur et, vers l'intérieur, les portions d'extrémité arrière du panneau arrière en nid d'abeilles 54 ou 64 et de la nappe interne 52 ou 62 qui recouvrent la face respectivement supérieure ou inférieure du cavalier 9. Comme représenté schématiquement sur la figure 2, chacune des deux bandes de renforcement 94 du bord de fuite est contituée par l'empilement de trois couches de tissu dissymétrique de verre, dont 90 % des fibres sont orientées dans le sens longitudinal ou de l'envergure, et les 10 % restants dans le sens de la corde.

La cohésion de la pale est assurée par la polymérisation des résines d'imprégnation de tous les composants qui sont ainsi solidarisés les uns aux autres. La disposition d'un longeron principal au bord d'attaque et d'un longeron central 2 à l'arrière du caisson principal avant 3 donne un caractère "fail-safe" complémentaire qui s'ajoute à celui résultant de la présence des deux caissons 3 et 4 juxtaposés de part et d'autre de l'âme 21 stratifiée et à sandwich de nid d'abeilles du longeron central 2, et qui s'étendent sur toute la corde, du fait que le longeron 1 et le longeron central 2 sont continus et intimement liés à la structure travaillante des revêtements 5 et 6, puisque le longeron 1 est repris avec une bonne continuité, en particulier par ses ailes 11 et 12, entre les nappes externes 51 et 61 et internes 52 et 62 des deux revêtements 5 et 6, et qu'il en est de même des semelles 22 et 23 du longeron central 2 qui sont de plus liées aux ailes 26 et 27 de l'âme 21 du longeron central 2.

Dans les nappes externes 51, 61 et internes 52, 62 des revêtements, les couches de tissu de fibres les plus fragiles aux chocs et les plus vitales, c'est-à-dire les couches de tissu de fibres aramides, sont disposées vers l'intérieur des revêtements 5 et 6 et protégées des agressions externes (chocs, rayures, etc.) par la couche externe en tissu de verre. De plus, les couches internes de tissu dont les fibres sont inclinées à ± 45° et les couches des nappes latérales 25 de l'âme 21 procurent la raideur de torsion des revêtements 5 et 6 de l'âme 21, tandis que les couches externes de tissu dont les fibres sont orientées selon l'axe longitudinal de la pale procurent la raideur de battement et de trainée des revêtements 5 et 6. Ces derniers, du fait de leur structure en sandwich de nid d'abeilles, présentent une grande rigidité et une grande sécurité en cas de chocs ou d'impacts, et ils conservent leur rôle structural même après un décollement entre une nappe interne 52 ou 62 de revêtement et un noyau de mousse 7 ou 8. Ces noyaux 7 et 8 ne participent que très faiblement à la résistance de la pale, mais ils assurent un rôle de conformateurs des longerons lors du moulage, en agissant comme des outillages internes exerçant une contre-pression. De plus, ces noyaux 7 et 8, du fait de leur souplesse, peuvent être facilement et économiquement usinés avec une surépaisseur suffisante pour éviter tout défaut de surface, car ils exercent alors une pression contre l'intérieur des revêtements 5 et 6, et les noyaux de mousse 7 et 8 remplissent également la fonction d'amortisseurs en cas de chocs ou d'impacts entraînant une déformation vers l'intérieur d'un revêtement 5 ou 6. En cas de perforation de la seule nappe externe 51 ou 61 d'un revêtement 5 ou 6, la réparation est facilement réalisée en rapportant dans la partie perforée une pièce standard composée d'une rondelle de mousse de même épaisseur que le nid d'abeilles à présent localement détruit, et d'un disque de même constitution que la nappe externe de revêtement. Par contre, si l'endommagement d'un revêtement 5 ou 6 est tel que ses deux nappes externe 51 ou 61 et interne 52 ou 62 sont perforées, il convient d'effectuer d'abord une réparation du noyau interne 7 ou 8 correspondant, par injection de résine, puis de colmater la perforation de la nappe interne par un disque de même constitution, et enfin de colmater l'évidement dans le nid d'abeille et la perforation dans la nappe externe par une pièce de réparation standard, comme expliqué ci-dessus, de manière à reconstituer le revêtement 5 ou 6.

Grâce à la présence des noyaux 7 et 8, formant des mandrins internes de conformation, il est possible de fabriquer la pale en une seule opération de moulage, à l'aide d'un unique moule comportant un demi-moule supérieur 100 et un demi-moule inférieur 101, qui sont rigides et complémentaires, et qui présentent des évidements internes dont les formes correspondent aux formes des moitiés respectivement supérieure et inférieure de la pale, en tenant compte des variations du profil de cette dernière sur les plans de la forme, de l'épaisseur, de la corde et du vrillage selon l'envergure. Les deux demi-moules 100 et 101 tournant leur évidement vers le haut, le procédé de moulage consiste tout d'abord à assembler les différents éléments constitutifs de la pale dans les deux demi-moules, en suivant un ordre de mise en place qui est le même dans chaque demi-moule pour tous les éléments constitutifs sauf les deux noyaux de mousse 7 et 8, la nervure centrale 21, le contrepoids 10 et la coiffe de protection de bord d'attaque 20, (qui sont des éléments préfabriqués), et le cavalier de bord de fuite 9, qui sont disposés dans le demi-moule inférieur 10. Comme représenté schématiquement sur la figure 2 pour le demi-moule inférieur 101, la mise en place des éléments par demi-moule consiste successivement à disposer d'abord au fond de l'évidement et de la zone du bord d'attaque à celle du bord de fuite, les quatre couches superposées de tissu de fibres imprégnées de résine polymérisable de la nappe externe 51 ou 61, en commençant par la couche de tissu de verre, puis en la recouvrant des trois couches de tissu de fibres aramides. Par-dessus la partie avant de cet empilement, on dispose ensuite des écheveaux de stratifils de verre longitudinaux et préimprégnés d'une résine polymérisable, et formant l'une de deux moitiés complémentaires du longeron avant 1, et le contrepoids 10 est ensuite placé à l'avant de ce demi-longeron 1 dans le demi-moule inférieur 101. Puis on place, sur la partie centrale de l'empilement des quatre couches de la nappe externe 51 ou 61, les écheveaux de stratifils de verre unidirectionnels et préimprégnés de résine polymérisable destinés à former la semelle correspondante 22 ou 23. Ensuite, on étale sur le tiers arrière des quatre couches de la nappe externe 51 ou 61, les trois couches superposées de tissu de verre préimprégné de résine polymérisable et qui forment la bande correspondante 94 de renforcement du bord de fuite. On dispose ensuite un panneau avant en nid d'abeilles 53 ou 63 entre le demi-longeron avant 1 et la semelle 22 ou 23 correspondante et un panneau arrière en nid d'abeilles 54 ou 64 derrière la semelle 22 ou 23 et par-dessus sensiblement la moitié avant de la bande de renforcement 94 correspondante, après avoir enduit les deux faces de chaque panneau d'un film de colle. Enfin, dans chaque demi-moule 100 et 101, on dispose l'empilement de trois couches de tissu préimprégné de résine polymérisable de la nappe interne correspondante 52 ou 62, en commençant par les deux couches internes de tissu de fibres aramides puis en étalant la couche externe de tissu de verre, ces trois couches s'étendant de l'avant, sur l'aile du demi-longeron 1 correspondant, puis par-dessus les panneaux 53 ou 63 et 54 ou 64 et la semelle 22 ou 23, et se terminent à l'arrière contre l'intérieur de la bande de renforcement 94 correspondante. La poursuite de la mise en place des éléments constitutifs consiste à disposer dans le demi-moule inférieur 101, le noyau de mousse avant 7, l'âme centrale en Z 21 dont l'aile inférieure 27 est placée en regard de la semelle 23, le noyau de mousse arrière 8, et enfin le cavalier de bord de fuite 9. Puis le demi-moule supérieur 100 garni est retourné au-dessus du demi-moule inférieur 101 également garni, comme représenté sur la figure 3, et ensuite les deux demi-moules 100 et 101 sont verrouillés l'un sur l'autre en position de fermeture du moule, qui est introduit dans une étuve chauffante pour y subir un cycle de polymérisation à la température convenable.

Selon la nature de la coiffe 20 de protection du bord d'attaque, cet élément peut être soit collé en position après le moulage de la pale, soit mis également en place dans le moule avant le moulage, en utilisant un moule à tiroir mobile de bord d'attaque, comme cela a déjà été suggéré dans le brevet français 84 19 432 déjà cité.

**Revendications**

1. Pale en matériaux composites, notamment pour rotor d'aérodyne à voilure tournante, comportant:
un caisson (3) de torsion et de flexion avant s'étendant sensiblement sur la moitié avant de la pale et délimité par:
un longeron avant (1) disposé le long du bord d'attaque (17) de la pale sur toute son envergure, et constitué d'au moins un faisceau de stratifils de fibres à haute résistance mécanique agglomérés par une résine synthétique polymérisée,
une nervure centrale et transversale (21), disposée sensiblement selon l'épaisseur de la pale de manière à relier sensiblement son extrados à son intrados, dans la partie moyenne de la corde et qui s'étend sur toute l'envergure de la pale,
des parties avant de revêtements d'extrados (5) et d'intrados (6) qui raccordent le longeron avant (1) à la nervure transversale (21) de manière à fermer le caisson avant (3), et
un noyau (7) de remplissage du caisson avant (3) en une matière alvéolaire, et
un élément arrière (8) de remplissage, également en une matière alvéolaire, adjacent à la nervure transversale (21) et s'étendant de celle-ci jusqu'à proximité du bord de fuite (93) de la pale et sur toute l'envergure de cette dernière, en présentant une forme en coin profilé à la forme de la moitié arrière de la pale,
caractérisée en ce qu'elle comprend de plus:
un longeron central (2), s'étendant également sur toute l'envergure de la pale, et comprenant une semelle d'extrados (22) et une semelle d'intrados (23), constituées chacune d'au moins un faisceau de stratifils de fibres à haute résistance mécanique agglomérés par une résine synthétique polymérisée, intégrées respectivement au revêtement d'extrados (5) et au revêtement d'intrados (6), et solidaires respectivement de l'extrémité supérieure et de l'extrémité inférieure de la nervure centrale et transversale (21), l'une d'un côté et l'autre de l'autre côté du plan moyen de la nervure (21) de sorte que le longeron central (2) présente une section de forme en Z dont les ailes d'extrémité sont formées par les semelles (22,23) de stratifils, et dont l'âme est formée par la nervure (21),
un caisson arrière de torsion et de flexion (4), s'étendant sensiblement sur la moitié arrière de la pale et délimité entre:
le longeron central (2), et
des parties arrière de revêtement d'extrados (5) et d'intrados (6) qui sont dans le prolongement vers l'arrière des parties de revêtement fermant le caisson avant (3) et qui sont solidarisés le long du bord de fuite de la pale de manière à fermer le caisson arrière (4) autour d'un noyau de remplissage (8) constitué par l'élément arrière de remplissage,

– lesdites parties avant et arrière des revêtements d'extrados (5) et d'intrados (6) présentant chacune une structure en coque stratifiée comportant une âme constituée d'un panneau (53, 54, 63, 64) d'épaisseur constante en nid d'abeilles, pris en sandwich entre deux nappes travaillantes (51, 52 ; 61, 62), auxquelles le panneau en nid d'abeilles est solidarisé par collage, et constituées chacune d'un empilement d'au moins deux couches de tissu de fibres à haute résistance mécanique agglomérées par une résine synthétique polymérisée, l'une des deux nappes étant une nappe interne (52, 62) adjacente au noyau correspondant (7,8) et l'autre une nappe externe (51, 61) formant la peau de la pale, et

– les deux noyaux de remplissage (7, 8) formant des mandrins de conformation interne non travaillants constitués de pains préfabriqués en une matière cellulaire très légère.

2. Pale selon la revendication 1, caractérisée en ce que le longeron avant (1) a une section sensiblement en forme de C, dont les deux extrémités libres (11,12) sont en butée contre le bord avant des panneaux en nid d'abeilles (63) des parties avant des revêtements d'extrados et d'intrados (5, 6), tandis que les nappes internes (52, 62) des dites parties avant des revêtements sont solidarisées par leur portion d'extrémité avant contre les faces internes (13, 14) des extrémités du longeron avant en C (1), entre lesdites faces internes (13, 14) et le noyau de remplissage avant (7) qui remplit l'évidement du longeron avant en C (1), et que les nappes externes (51, 61 ) desdites parties avant des revêtements sont solidarisées par leur portion d'extrémité avant contre les faces externes du longeron avant en C (1) qu'elles recouvrent au moins partiellement.

3. Pale selon la revendication 2, caractérisée en ce que le longeron avant en C (1) présente, dans sa partie directement adjacente au bord d'attaque (17), un évidement longitudinal (19) logeant un contrepoids (10) de centrage de la section transversale de la pale sensiblement au quart avant de la corde, dans la partie courante de la pale, ledit contrepoids (10) étant recouvert par les portions avant des nappes externes (51, 61) des parties avant des revêtements d'extrados et d'intrados (5, 6) de la pale, qui se rejoignent au niveau du bord d'attaque (17).

4. Pale selon l'une des revendications 1 à 3, caractérisée en ce que le longeron avant (1) présente, sur l'avant de sa face externe, un redan (18) dans lequel est logée une coiffe (20) de protection du bord d'attaque, et en ce que les nappes externes (51, 61) des parties avant des revêtements d'extrados et d'intrados (5, 6) sont pincées par leur portion d'extrémité avant dans le redan (18) du longeron avant (1), entre ce dernier et ladite coiffe (20).

5. Pale selon l'une des revendications 1 à 4, caractérisée en ce que la nappe externe (51, 61) de chacun des revêtements (5, 6) s'étend de manière continue du bord d'attaque (17) de la pale à son bord de fuite (93) en recouvrant la face externe de la semelle (22, 23) correspondant du longeron central (2) ainsi que la face externe d'un panneau avant et d'un panneau arrière en nid d'abeilles (53, 54; 63, 64) du revêtement correspondant (5, 6), qui s'étendent respectivement du longeron avant (1) à la semelle (22, 23) et de ce dernier jusqu'à proximité du bord de fuite (93) de la pale, et en ce que la nappe interne (52, 62) de chacun des revêtements (5,6) s'étend de manière continue du longeron avant (1) au bord de fuite (93) de la pale en recouvrant la face interne de la semelle (22, 23) correspondant du longeron central (2), ainsi que la face interne desdits panneaux avant et arrière en nid d'abeilles du revêtement correspondant.

6. Pale selon l'une des revendications 1 à 5, caractérisée en ce que la nervure (21) formant l'âme du longeron central (2) présente une structure en coque stratifiée comportant un remplissage (24) constitué d'un panneau d'épaisseur constante en nid d'abeilles pris en sandwich entre deux nappes latérales (25), auxquelles le nid d'abeilles est solidarisé par collage et constituées chacune d'au moins une couche d'un tissu de fibres agglomérées par une résine synthétique polymérisée.

7. Pale selon la revendication 6, telle que rattachée à la revendication 5, caractérisée en ce que les deux nappes latérales (25) de ladite nervure (21) formant l'âme du longeron central (2) se prolongent au-delà des extrémités supérieure et inférieure de son remplissage (24) en nid d'abeilles de manière à former deux ailes (26, 27) s'étendant l'une d'un côté et l'autre de l'autre côté du plan moyen dudit remplissage en nid d'abeilles (24) et solidarisées contre lesdites nappes internes (52, 62) des revêtements d'extrados et d'intrados (5, 6) aux niveaux desdites semelles (22, 23) du longeron central (2).

8. Pale selon l'une des revendications 1 à 7, caractérisée en ce que ladite nervure (21) formant l'âme du longeron central (2) est légèrement inclinée de l'avant vers l'arrière et de l'extrados vers l'intrados, et lesdites semelles (22, 23) d'extrados et d'intrados s'étendent respectivement vers l'avant et vers l'arrière de ladite nervure (21).

9. Pale selon l'une des revendications 1 à 8, caractérisée en ce que chacune des nappes externes et internes (51, 61, 52, 62) des revêtements d'extrados et d'intrados (5, 6) est constituée par un empilement de couches de tissu de fibres de natures différentes, la ou les couches de tissu dont les fibres sont les plus fragiles aux chocs étant disposées vers l'intérieur du revêtement correspondant.

10. Pale selon l'une des revendications 1 à 9, caractérisée en ce que deux bandes de renforcement (94) du bord de fuite (93), s'étendant sensiblement sur le tiers arrière de la pale et réalisées en matériau armé de fibres à haute résistance mécanique en nappes ou tissu, sont disposées chacune entre des portions arrière en regard de la nappe externe (51, 61) de l'un des revêtements, d'un côté, et, de l'autre côté, de la face externe du panneau en nid d'abeilles arrière (54, 64) et de la nappe interne (52, 62) du revêtement (5, 6) correspondant, de sorte que les nappes externes (51, 61) et les bandes de renforcement (94) forment, dans leur portion d'extrémité arrière, une languette de bord de fuite (93), tandis que les nappes internes (52, 62) desdits revêtements sont solidarisées, dans leur portion d'extrémité arrière, contre l'intérieur des bandes de renforcement (94).

11. Pale selon l'une des revendications 1 à 10, caractérisée en ce que la liaison entre les nappes internes (52, 62) des revêtements (4, 5) dans leur portion d'extrémité arrière est assurée par un cavalier de bord de fuite (9) formé d'un coin de mousse (92) enserré dans une nervure de section en C (91) solidarisée par sa face externe contre l'intérieur des nappes internes (52, 62).

12. Pale selon l'une des revendications 1 à 11, caractérisée en ce que le longeron avant (1) et les semelles (22,23) du longeron central (2) sont constitués de stratifils de verre unidirectionnels orientés selon l'envergure de la pale.

13. Pale selon l'une des revendications 1 à 12, caractérisée en ce que chaque nappe latérale (25) de la nervure (21) formant l'âme du longeron central (2) est constituée d'un empilement de trois couches de tissu de fibres de verre dont les fibres sont orientées à ± 45° par rapport à l'axe longitudinal de la pale.

14. Pale selon l'une des revendications 1 à 13, caractérisée en ce que chaque nappe interne ou externe de chaque revêtement d'extrados ou d'intrados comprend une couche externe, par rapport au revêtement considéré, de tissu de fibres de verre dont les fibres sont orientées selon l'axe longitudinal de la pale et perpendiculairement à cet axe, chaque nappe interne et chaque nappe externe comprenant de plus, respectivement deux et trois couches internes, par rapport au revêtement considéré, de tissu de fibres aramides ou de carbone dont les fibres sont orientées à ± 45° par rapport à l'axe longitudinal de la pale.

15. Pale selon l'une des revendications 1 à 14, caractérisée en ce que chaque bande de renforcement (94) du bord de fuite est constituée de deux ou trois couches superposées de tissus dissymétriques de fibres de verre ou de carbone dont 90 % des fibres sont orientées selon l'axe longitudinal de la pale et 10 % des fibres perpendiculairement à cet axe.

16. Pale selon l'une des revendications 1 à 15, caractérisée en ce que la nervure en C (91) du cavalier de bord de fuite (9) est constituée par la superposition de deux couches de tissu de fibres de verre dont les fibres sont orientées selon l'axe de la pale et perpendiculairement à cet axe.

17. Procédé de fabrication d'une pale selon l'une des revendications précédentes, consistant:
- à assembler les différents éléments constitutifs de la pale dans deux demi-moules (100, 101) supérieurs et inférieurs complémentaires et rigides d'un moule unique, tel que la forme intérieure de chaque demi-moule soit adaptée à la forme de la moitié supérieure ou inférieure correspondante du profil extérieur de la pale, compte tenu de ses variations de forme, d'épaisseur, de corde et de vrillage selon son envergure,
- à verrouiller le demi-moule supérieur (100) sur ledit moule inférieur (101), et
- à placer le moule fermé et garni dans une étuve chauffante et à lui faire subir un cycle de polymérisation au cours d'une unique opération de moulage, caractérisé en ce que l'ordre de mise en place des éléments est le même dans les deux demi-moules (100, 101), seuls le contrepoids (10), les noyaux avant et arrière (7, 8) la nervure centrale (21) et le cavalier de bord de fuite (9) étant placés dans le demi-moule inférieur (101), et en ce qu'il consiste:
à mettre successivement en place, dans chacun des demi-moules (100, 101), la nappe externe (51, 61) du revêtement (5, 6) correspondant, en disposant d'abord dans le fond du demi-moule, la ou les couches de tissu de fibres imprégnées de résine polymérisable dont les fibres sont les plus fragiles aux chocs, lorsque la nappe externe comprend des tissus de fibres de natures différentes,
des écheveaux de stratifils imprégnés de résine polymérisable, formant l'une de deux moitiés complémentaires du longeron avant (1), et, dans le demi-moule inférieur (101), le contrepoids (10) à l'avant desdits écheveaux dans ce demi-moule (101),
des écheveaux de stratifils imprégnés de résine polymérisable, et formant la semelle (22, 23) correspondante du longeron central (2).
une bande de renforcement (94) du bord de fuite sur le tiers arrière de la nappe externe (51, 61)
le panneau avant (53, 63) et le panneau arrière (54, 64) de nid d'abeilles du revêtement (5, 6) correspondant, disposés sur la nappe externe (51, 61), le premier entre le demi-longeron avant (1) et la semelle correspondante (22, 23), et le second derrière cette dernière vers le bord de fuite, après avoir appliqué un film de colle de part et d'autre des deux panneaux (53, 54 ; 63, 64), et
la nappe interne (52, 62) du revêtement (5, 6) correspondant, en disposant d'abord dans le demi-moule correspondant la ou les couches de tissu de fibres imprégnées de résine polymérisable dont les fibres sont les plus fragiles aux chocs, lorsque la nappe interne comporte des tissus de fibres de natures différentes, puis
à mettre en place dans le demi-moule inférieur (101), le noyau avant (7),
la nervure centrale (21), formant l'âme du longeron central (2)
le noyau arrière (8), et
le cavalier de bord de fuite (9),
avant que de retourner le demi-moule supérieur (100) garni sur le demi-moule inférieur garni (101) et de fermer le moule pour effectuer la polymérisation.

**Patentansprüche**

1. Flügel aus zusammengesetzten Materialien, insbesondere für einen Rotor eines Luftfahrzeuges mit Drehflügeln, mit:
einem vorderen Torsions- und Biegungskasten (3), der sich etwa über die vordere Hälfte des Flügels erstreckt und begrenzt ist von:
einem vorderen Holm (1), der entlang der Anströmkante (17) des Flügels über dessen ganze Spannweite angeordnet ist und mindestens ein Bündel geschichteter, aus Fasern hoher mechanischer Festigkeit bestehender Fäden aufweist, die durch ein polymerisiertes Kunstharz verbunden sind, einer zentralen, quer gerichteten Rippe (21), die sich etwa über die Dicke des Flügels erstreckt, sodaß sie im wesentlichen dessen Oberseite mit dessen Unterseite im mittleren Teil der Bogensehne, d.h. der Flügeltiefe verbindet und die sich über die ganze Spannweite des Flügels erstreckt, den vorderen Teilen der Beplankung der Oberseite (5) und der Unterseite (6), die den vorderen Holm (1) mit der Querrippe (21) verbinden und damit den vorderen Kasten (3) schließen und

einem Kern (7) aus einem Zellen aufweisenden Material zum Ausfüllen des vorderen Kastens (3) und einem hinteren Füllelement (8), das ebenfalls aus einem Zellen aufweisenden Material besteht, an die Querrippe (21) angrenzt und sich von dieser bis in die Nachbarschaft der Abströmkante (93) des Flügels und über dessen ganze Spannweite erstreckt, wobei es ein keilförmiges Teil bildet, das entsprechend der Form der hinteren Hälfte des Flügels profiliert ist, dadurch gekennzeichnet, daß er darüber hinaus umfaßt:

einen zentralen Holm (2), der sich ebenfalls über die ganze Spannweite des Flügels erstreckt mit einem flügeloberseitigen Gurt (22) und einem flügelunterseitigen Gurt (23), deren jeder mindestens ein Bündel geschichteter, aus Fasern hoher mechanischer Festigkeit bestehender, durch ein polymerisiertes Kunstharz verbundener Fäden aufweist und die jeweils einen Teil der flügeloberseitigen Beplankung (5) und der flügelunterseitigen Beplankung (6) bilden und jeweils kraftschlüssig verbunden sind mit dem oberen Ende und dem unteren Ende der zentralen Querrippe (21), wobei der eine Gurt auf der einen Seite und der andere Gurt auf der anderen Seite der Mittelebene der Rippe (21) angeordnet ist, sodaß der zentrale Holm (2) einen Z-förmigen Querschnitt besitzt, dessen äußere Schenkel von den die geschichteten Fäden aufweisenden Gurten (22, 23) gebildet werden und dessen Verbindungssteg von der Rippe (21) gebildet wird,

einen hinteren Torsions- und Biegungskasten (4), der sich im wesentlichen über die hintere Häfte des Flügels erstreckt und begrenzt wird von:

dem zentralen Holm (2) und

den hinteren Teilen der Beplankung der Flügeloberseite (5) und der Flügelunterseite (6), die sich in Verlängerung nach hinten der Beplankungsteile erstrecken, die den vorderen Kasten bilden und die entlang der Abströmkante des Flügels kraftschlüssig miteinander verbunden sind, sodaß der hintere Kasten (4) um einen vom hinteren Füllelement gebildeten Füllkern (8) geschlossen wird,

wobei die vorderen und hinteren Teile der Beplankung der Flügeloberseite (5) und der Flügelunterseite (6) jeweils die Struktur einer aus Schichten aufgebauten Schale besitzen mit einem Verbindungskern, der eine Tafel (53, 54, 63, 64) konstanter Dicke mit Bienenwabenstruktur aufweist, die in Sandwichbauart zwischen zwei tragenden Decken (51, 52, 61, 62) aufgenommen ist, mit denen die Tafel mit Bienenwabenstruktur durch Klebung kraftschlüssig verbunden ist und die jeweils eine Schichtung aufweisen mit mindestens zwei Lagen von Gewebe aus Fasern hoher mechanischer Festigkeit, die mittels eines polymerisierten Kunstharzes miteinander verbunden sind, wobei eine der beiden Decken eine innere, dem entsprechenden Kern (7, 8) benachbarte Decke (52, 62) und die andere Decke eine die Haut des Flügels bildende äußere Decke (51, 61) ist und

die beiden Füllkerne (7, 8) unbelastete innere Formhaltekerne darstellen, die von vorgefertigten Formteilen aus einer sehr leichten, Zellen aufweisenden Masse gebildet sind.

2. Flügel nach Anspruch 1, dadurch gekennzeichnet, daß der vordere Holm (1) einen im wesentlichen C-förmigen Querschnitt aufweist, dessen beide freie Enden (11, 12) anliegen jeweils an der Vorderkante der Tafeln (63) mit Bienenwabenstruktur der vorderen Teile der Beplankungen der Flügeloberseite (5) und der Flügelunterseite (6), während die inneren Decken (52, 62) der besagten vorderen Teile der Beplankungen mit ihren vorderen Endabschnitten kraftschlüssig befestigt sind an den Innenflächen (13, 14) der freien Schenkel des vorderen C-förmigen Holms (1), zwischen diesen Innenflächen (13, 14) und dem vorderen Füllkern (7) der die Ausnehmung des C-förmigen vorderen Holms (1) ausfüllt und daß die äußeren Decken (51, 61) dieser vorderen Teile der Beplankungen mit ihren vorderen Endabschnitten kraftschlüssig befestigt sind an den Außenflächen des C-förmigen vorderen Holms (1), den sie mindestens zum Teil bedecken.

3. Flügel nach Anspruch 2, dadurch gekennzeichnet, daß der C-förmige vordere Holm (1) in seinem der Anströmkante (17) direkt benachbarten Bereich eine Längsausnehmung (19) aufweist, die ein Gegengewicht (10) aufnimmt zur Zentrierung des Querschnittes des Flügels etwa auf das vordere Viertel der Bogensehne, d.h. der Flügeltiefe im laufenden Teil des Flügels, wobei dieses Gegengewicht (10) von den vorderen Teilen der äußeren Decken (51, 61) der vorderen Teile der Beplankungen der Oberseite und der Unterseite (5, 6) des Flügels abgedeckt ist, die sich auf dem Niveau der Anströmkante (17) treffen.

4. Flügel nach einem der Ansprüche 1 bis 3, dadurch gekennzeichnet, daß der vordere Holm (1) im vorderen Bereich seiner Außenfläche eine flache Ausnehmung (18) aufweist, in der eine Schutzkappe (20) der Anströmkante angeordnet ist und daß die äußeren Decken (51, 61) der vorderen Teile der Beplankungen der Oberseite und der Unterseite (5, 6) mit einem vorderen Endabschnitt in der Ausnehmung (18) des vorderen Holms zwischen letzterem und der Schutzkappe (20) befestigt sind.

5. Flügel nach einem der Ansprüche 1 bis 4, dadurch gekennzeichnet, daß die äußere Decke (51, 61) jeder der Beplankungen (5, 6) sich durchgehend von der Anströmkante (17) des Flügels zu dessen Abströmkante (93) erstreckt, wobei sie die äußere Fläche des entsprechenden Gurts (22, 23) des zentralen Holms (2) überdeckt sowie die Außenfläche einer vorderen Tafel (53, 63) und einer hinteren Tafel (54, 64) mit Bienenwabenstruktur der entsprechenden Beplankung (5, 6), die sich jeweils vom vorderen Holm (1) zu dem Gurt (22, 23) und von letzterem bis in die Nähe der Abströmkante (93) des Flügels erstrecken und daß die innere Decke (52, 62) jeder der Beplankungen (5, 6) sich durchgehend erstreckt vom vorderen Holm (1) zur Abströmkante (93) des Flügels, wobei sie die Innenseite des entsprechenden Gurtes (22, 23) des zentralen Holms (2) überdeckt sowie die Innenseite der genannten vorderen und hinteren Tafeln mit Bienenwabenstruktur der entsprechenden Beplankung.

6. Flügel nach einem der Ansprüche 1 bis 5, dadurch gekennzeichnet, daß die Rippe (21), die den Verbindungssteg des zentralen Holms (2) bildet, eine geschichtete Schalenstruktur aufweist, mit einer Füllung (24), die aus einer Tafel konstanter Dicke mit einer Bienenwabenstruktur besteht, die in Sandwichbauart zwischen zwei seitlichen Deckschichten (25) aufgenommen ist, an denen die Bienenwabenstruktur durch Kleben befestigt ist und deren jede mindestens eine Lage eines Gewebes von Fasern aufweist, die durch ein polymerisiertes Kunstharz miteinander verbunden sind.

7. Flügel nach Anspruch 6 in Verbindung mit Anspruch 5, dadurch gekennzeichnet, daß die beiden seitlichen Deckschichten (25) der Rippe (21), die den Verbindungssteg des zentralen Holms (2) bildet, sich über die obere und untere Begrenzung der Füllung (24) mit der Bienenwabenstruktur hinaus erstreckt um zwei Flügel (26, 27) zu bilden, dessen einer sich nach der einen Seite und dessen anderer sich nach der anderen Seite der Mittelebene der Füllung (24) mit der Bienenwabenstruktur erstreckt und im Bereich der Gurte (22, 23) des zentralen Holms (2) formschlüssig mit den inneren Decken (52, 62) der Beplankungen der Oberseite und der Unterseite (5, 6) verbunden ist.

8. Flügel nach einem der Ansprüche 1 bis 7, dadurch gekennzeichnet, daß die Rippe (21), die den Verbindungssteg des zentralen Holms (2) bildet, leicht von vorn nach hinten geneigt ist von der Oberseite gegen die Unterseite hin und die Gurte (22, 23) der Oberseite und der Unterseite sich jeweils nach vorn und nach hinten von dieser Rippe (21) erstrecken.

9. Flügel nach einem der Ansprüche 1 bis 8, dadurch gekennzeichnet, daß jede der äußeren und inneren Decken (51, 61, 52, 62) der Beplankungen der Oberseite und der Unterseite (5, 6) einen Stapel von Lagen von Gewebe aus Fasern verschiedener Art aufweist, wobei die Lage oder die Lagen von Gewebe, deren Fasern am stoßempfindlichsten sind, gegen das Innere der entsprechenden Beplankung hin angeordnet sind.

10. Flügel nach einem der Ansprüche 1 bis 9, dadurch gekennzeichnet, daß zwei Verstärkungsstreifen (94) der Abströmkante (93), die sich etwa über das hintere Drittel des Flügels erstrecken und aus einem mit Fasern hoher mechanischer Festigkeit in Form von Vliesen oder Geweben armierten Material bestehen, jeweils angeordnet sind zwischen hinteren Bereichen der äußeren Decke (51, 61) einer der Beplankungen einerseits und der Außenseite der hinteren Tafel (54, 64) mit Bienenwabenstruktur sowie der inneren Decke (52, 62) dieser Beplankung (5, 6) andererseits, sodaß die äußeren Decken (51, 61) und die Verstärkungsstreifen (94) in ihren hinteren Endbereichen eine die Abströmkante bildende Endzunge ergeben, während die inneren Decken (52, 62) dieser Beplankungen in ihren hinteren Endabschnitten formschlüssig mit dem inneren der Verstärkungsstreifen verbunden sind.

11. Flügel nach einem der Ansprüche 1 bis 10, dadurch gekennzeichnet, daß die Verbindung zwischen den inneren Decken (52, 62) der Beplankungen (4, 5) in ihren hinteren Endbereichen mittels eines Abströmkanten-Einsatzteils (9) sichergestellt ist, das gebildet wird von einem Schaumkeil (92), der in eine Rippe (91) mit C-förmigem Querschnitt eingeschlossen ist, die ihrerseits mit ihrer Außenseite kraftschlüssig mit der Innenseite der inneren Decken (52, 62) verbunden ist.

12. Flügel nach einem der Ansprüche 1 bis 11, dadurch gekennzeichnet, daß der vordere Holm (1) und die Gurte (22, 23) des zentralen Holms (2) geschichtete, sich in einer Richtung erstreckende Glasfaserfäden aufweisen, die sich in Richtung der Spannweitenerstreckung des Flügels erstrecken

13. Flügel nach einem der Ansprüche 1 bis 12, dadurch gekennzeichnet, daß jede seitliche Decke (25) der den Verbindungssteg des zentralen Holms (2) bildenden Rippe (21) eine Schichtung von drei Lagen von Gewebe aus Glasfasern aufweist, deren Fasern sich unter ±45° relativ zur Längsachse des Flügels erstrecken.

14. Flügel nach einem der Ansprüche 1 bis 13, dadurch gekennzeichnet, daß jede innere oder äußere Decke jeder Beplankung der Oberseite oder der Unterseite eine, in bezug auf die jeweilige Beplankung äußere Lage von Gewebe aus Glasfasern aufweist, dessen Fasern in Richtung der Längsachse des Flügels und senkrecht zu dieser verlaufen und jede innere und jede äußere Decke darüber hinaus jeweils zwei und drei in bezug auf die betrachtete Beplankung innere Lagen von Gewebe aus Aramid-Fasern oder Kohlenstoff-Fasern aufweist, dessen Fasern in einem Winkel von ±45° relativ zur Längsachse des Flügels verlaufen.

15. Flügel nach einem der Ansprüche 1 bis 14, dadurch gekennzeichnet, daß jeder Verstärkungsstreifen (94) der Abströmkante zwei oder drei übereinander gelagerte Lagen von unsymmetrischem Gewebe aus Glas-Fasern oder Kohlenstoff-Fasern aufweist, wobei 90% der Fasern sich in Richtung der Längsachse des Flügels erstrecken und 10% der Fasern senkrecht zu dieser Längsachse.

16. Flügel nach einem der Ansprüche 1 bis 15, dadurch gekennzeichnet, daß die C-förmige Rippe (91) des Abströmkanten-Einsatzteiles (9) eine Übereinanderlagerung von zwei Lagen von Gewebe aus Glas-Fasern aufweist, dessen Fasern in Richtung der Längsachse des Flügels und senkrecht dazu gerichtet sind.

17. Verfahren zur Herstellung eines Flügels nach einem der vorhergehenden Ansprüche, mit den Schritten

des Zusammenbaues der verschiedenen Elemente aus denen der Flügel besteht in zwei zusammengehörigen Formhälften (100, 101) und zwar einer oberen und einer unteren starren Formhälfte einer gemeinsamen Form, wobei die innere Oberflächenform jeder Formhälfte der entsprechenden oberen oder unteren Hälfte der äußeren Oberflächenform des Flügels entspricht unter Berücksichtigung von dessen über die Spannweite bzw. Länge unterschiedlicher Formgebung hinsichtlich Dicke, Bogensehne bzw. Flügeltiefe und bleibender Verwindung, der Verriegelung der oberen Halbform (100) auf der unteren Halbform (101) und des Einsetzens der geschlossenen und bestückten Form in einen Ofen und des diese einem Polymerisations-Zyklus unterwerfen im Verlauf eines einzigen Formungsvorganges, dadurch gekennzeichnet, daß die Reihenfolge des Einlegens der Elemente bei beiden Halbformen (100, 101) die gleiche ist mit Ausnahme des Gegengewichtes (10), des vorderen und des hinteren Kerns (7, 8), der zentralen Kippe (21) und des Abströmkanten-Einsatzformteils (9), die in die untere Halbform (101) eingesetzt werden, und daß es die Schritte umfaßt:

Nacheinander an ihren Platz in jede der Halbschalen (100, 101) einzusetzen,

die äußere Decke (51, 61) der entsprechenden Beplankung (5, 6), wobei zunächst auf den Grund der Halbform die Lage oder die Lagen des mit polymerisierbarem Harz getränkten Faser-Gewebes gelegt wird bzw. werden, dessen Fasern die stoßempfindlichsten sind, falls die äußere Decke Gewebe aus Fasern verschiedener Art aufweist,

Strähnen der mit polymerisierbarem Harz getränkten geschichteten Fäden, die eine der beiden zusammengehörigen Hälften des vorderen Holms (1) bilden, und in die untere Halbform (101) das Gegengewicht (10) vor diese Strähnen in dieser Halbform (101),

Strähnen der mit polymerisierbarem Harz getränkten, geschichteten Fäden, die den entsprechenden Gurt (22, 23) des zentralen Holms (2) bilden, einen Verstärkungsstreifen (94) der Abströmkante auf das hintere Drittel der äußeren Decke (51, 61), die vordere Tafel (53, 63) und die hintere Tafel (54, 64) mit Bienenwabenstruktur der entsprechenden Beplankung (5, 6), die auf die äußere Decke (51, 61) plaziert werden, wobei erstere zwischen dem vorderen Halbholm (1) und dem entsprechenden Gurt (22, 23) und die zweite hinter letzterem gegen die Abströmkante hin angeordnet werden, nachdem man einen Klebstoff-Film auf beide Seiten der beiden Tafeln (53, 54, 63, 64) aufgebracht hat und

die innere Decke (52, 62) der entsprechenden Beplankung (5, 6), wobei zunächst in die entsprechende Halbform die Lage oder die Lagen der mit polymerisierbarem Harz getränkten Gewebe eingelegt werden, deren Fasern am stoßempfindlichsten sind, falls die innere Decke Gewebe mit Fasern unterschiedlicher Art aufweist, und dann

an ihren Platz in der unteren Halbform (101) einzusetzen

den vorderen Kern (7)

die zentrale Rippe (21), die den Verbindungssteg des zentralen Holms (2) bildet,

den hinteren Kern (8) und

das Abströmkanten-Einsatzformteil (9)

vor dem Zurückwenden der bestückten oberen Halbform (100) auf die bestückte untere Halbform (101) und dem Schließen der Form um die Polymerisation durchzuführen.

## Claims

1. Blade made of composite materials, in particular for the rotor of an aerodyne with rotary wing, comprising:

a forward torsional and flexural box (3) extending substantially over the front half of the blade and delimited by:

a front spar (1) arranged along the leading edge (17) of the blade over its full extent, and consisting of at least one bundle of fibre rovings having a high mechanical strength and bonded by a polymerised synthetic resin,

a central and transverse rib (21), arranged substantially along the thickness of the blade so that it substantially connects its low pressure surface to its high pressure surface, in the central portion of the chord, and which extends over the full length of the blade,

front portions of low pressure side (5) and high pressure side (6) coverings which connect the front spar (1) to the transverse rib (21) so as to close the forward box (3), and

a filler core (7) for the forward box (3) made of a cellular material, and

a rearward filler element (8), also made of a cellular material, adjacent to the transverse rib (21) and extending from the latter almost to the trailing edge (93) of the blade and over the full length of the latter, being in the shape of a wedge having a shape matched in outline to the rear half of the blade, characterised in that it additionally comprises:

a central spar (2), also extending over the full length of the blade, and comprising a low pressure side bedding-plate (22) and a high pressure side bedding-plate (23), each consisting of at least one bundle of fibre rovings having a high mechanical strength and bonded by a polymerised synthetic resin, integrated respectively with the low pressure side covering (5) and the high pressure side covering (6), and rigidly connected respectively to the upper end and the lower end of the central transverse rib (21), one on one side and the other on the other side of the middle plane of the rib (21) so that the central spar (2) has a section in the shape of a Z, the end limbs of which are formed by the bedding-plates (22, 23) made of rovings and the centre of which is formed by the rib (21),

a rearward torsional and flexural box (4), extending substantially over the rear half of the blade and delimited between:

the central spar (2), and

rear portions of low pressure side (5) and high pressure side (6) coverings which are in rearward extension of the portions of covering closing the forward box (3) and which are rigidly connected along the trailing edge of the blade so as to close the rearward box (4) round a filler core (8) formed by the rear filler element,

- the said front and rear portions of the low pressure side covering (5) and high pressure side covering (6) each having a layered shell structure comprising a core formed of a honeycomb panel (53, 54, 63, 64) of uniform thickness sandwiched between two stress-bearing layers (51, 52; 61, 62) to which the honeycomb panel is rigidly secured by means of adhesive, and each formed by a stack of at least two layers of cloth consisting of fibres having a high mechanical strength and bonded by a polymerised synthetic resin, one of the two layers being an inner layer (52, 62) adjacent to the corresponding core (7, 8) and the other an outer layer (51, 61) forming the skin of the blade, and
- the two filler cores (7, 8) forming non-stress-bearing inner shaping mandrels formed by prefabricated bodies made of a very light cellular material.

2. Blade according to Claim 1, characterised in that the front spar (1) has a section substantially in the shape of a C, the two free ends (11, 12) of which abut the front edge of the honeycomb panels (63) of the front portions of the low pressure side and high pressure side coverings (5, 6), while the inner layers (52, 62) of the said front portions of the coverings are rigidly fixed by their front end part against the inner faces (13, 14) of the ends of the C-shaped front spar (1), between the said inner faces (13, 14) and the front filler core (7) which fills the recess in the C-shaped front spar (1), and that the outer layers (51, 61) of the said front portions of the coverings are rigidly fixed by their front end part against the outer faces of the C-shaped front spar (1) which they cover at least partially.

3. Blade according to Claim 2, characterised in that the C-shaped front spar (1) has in the portion immediately adjacent to the leading edge (17) a longitudinal recess (19) accommodating a counterweight (10) for centring the transverse section of the blade substantially at the front quarter of the chord, in the running portion of the blade, the said counterweight (10) being covered by the front parts of the outer layers (51, 61) of the front portions of the low pressure side and high pressure side coverings (5, 6) of the blade, which join at the leading edge (17).

4. Blade according to one of Claims 1 to 3, characterised in that the front spar (1) has, at the front of its outer face, a rebate (18) in which is lodged a protective cover plate (20) for the leading edge, and that the outer layers (51, 61) of the front portions of the low pressure side and high pressure side coverings (5, 6) are clamped by their front end-part in the rebate (18) of the front spar (1), between the latter and the said cover plate (20).

5. Blade according to one of Claims 1 to 4, characterised in that the outer layer (51, 61) of each of the coverings (5, 6) extends continuously from the leading edge (17) of the blade to its trailing edge (93), covering the outer face of the corresponding bedding-plate (22, 23) of the central spar (2) as well as the outer face of a front and a rear honeycomb panel (53, 54; 63, 64) of the corresponding covering (5, 6), which extend respectively from the front spar (1) to the bedding-plate (22, 23) and from the latter almost to the trailing edge (93) of the blade, and that the inner layer (52, 62) of each of the coverings (5, 6) extends continuously from the front spar (1) to the trailing edge (93) of the blade, covering the inner face of the corresponding bedding-plate (22, 23) of the central spar (2), as well as the inner face of the said front and of the said rear honeycomb panel of the corresponding covering.

6. Blade according to one of Claims 1 to 5, characterised in that the rib (21) forming the core of the central spar (2) has a layered shell structure comprising a filler (24) formed of a honeycomb panel of uniform thickness sandwiched between two lateral layers (25), to which the honeycomb is rigidly secured by means of adhesive, and each formed of at least one layer of a cloth consisting of fibres bonded by a polymerised synthetic resin.

7. Blade according to Claim 6, as connected to Claim 5, characterised in that the two lateral layers (25) of the said rib (21) forming the core of the central spar (2) extend beyond the upper and lower ends of its honeycomb filler (24) so as to form two limbs (26, 27), one extending on one side and the other on the other side of the middle plane of the said honeycomb filler (24) and rigidly fixed against the said inner layers (52, 62) of the low pressure side and high pressure side coverings (5, 6) at the level of the said bedding-plates (22, 23) of the central spar (2).

8. Blade according to one of Claims 1 to 7, characterised in that the said rib (21) forming the core of the central spar (2) is slightly inclined from front to back and from the low pressure side to the high pressure side, and the said low pressure side and high pressure side bedding-plates (22, 23) extend respectively forwards and rearwards of the said rib (21).

9. Blade according to one of Claims 1 to 8, characterised in that each of the outer and inner layers (51, 61, 52, 62) of the low pressure side and high pressure side coverings (5, 6) is formed by a stack of layers of cloth consisting of fibres of different kinds, the layer or layers of cloth made of the fibres which are least shock-resistant being arranged towards the inside of the corresponding covering.

10. Blade according to one of Claims 1 to 9, characterised in that two reinforcing strips (94) for the trailing edge (93), extending substantially over the rear third of the blade and made of material reinforced with fibres having a high mechanical strength, in the form of layers or cloth, are each arranged between opposed rear parts of the outer layer (51, 61) of one of the coverings, on the one hand, and on the other hand, of the outer face of the rear honeycomb panel (54, 64) and of the inner layer (52, 62) of the corresponding covering (5, 6) so that the outer layers (51, 61) and the reinforcing strips (94) form, with their rear end part, a trailing edge tongue (93), while the inner layers (52, 62) of the said coverings are rigidly fixed, by their rear end part, against the inside of the reinforcing strips (94).

11. Blade according to one of Claims 1 to 10, characterised in that the connection between the inner layers (52, 62) of the coverings (4, 5) in their rear end part is provided by a trailing edge tab (9) formed by a foam wedge (92) clamped in a rib (91) of C-shaped section rigidly fixed by its outer face against the inside of the inner layers (52, 62).

12. Blade according to one of Claims 1 to 11, characterised in that the front spar (1) and the bedding-plates (22, 23) of the central spar (2) are composed of unidirectional glass fibre rovings oriented along the length of the blade.

13. Blade according to one of Claims 1 to 12, characterised in that each lateral layer (25) of the rib (21) forming the core of the central spar (2) consists of a stack of three layers of glass fibre cloth, the fibres of which are arranged at $\pm 45°$ with respect to the longitudinal axis of the blade.

14. Blade according to one of Claims 1 to 13, characterised in that each inner or outer layer of each low pressure side or high pressure side covering comprises an outer layer, in relation to the covering in question, of glass fibre cloth, the fibres of which are arranged along the longitudinal axis of the blade and perpendicularly to the said axis, each inner layer and each outer layer additionally comprising, respectively, two and three inner layers, in relation to the covering in question, of aramide or carbon fibre cloth, the fibres of which are arranged at $\pm 45°$ with respect to the longitudinal axis of the blade.

15. Blade according to one of Claims 1 to 14, characterised in that each reinforcing strip (94) for the trailing edge consists of two or three superposed layers of unsymmetrical glass or carbon fibre cloth, of which 90% of the fibres are arranged along the longitudinal axis of the blade and 10% of the fibres perpendicularly to the said axis.

16. Blade according to one of Claims 1 to 15, characterised in that the C-shaped rib (91) of the trailing edge tab (9) is formed by superposing two layers of glass fibre cloth, the fibres of which are oriented along the axis of the blade and perpendicularly to the said axis.

17. Method for the manufacture of a blade according to one of the preceding Claims, which consists in:

- assembling the various elements forming the blade in two upper and lower complementary rigid half-moulds (100, 101) of a single mould, such that the inner shape of each half-mould is matched to the shape of the corresponding upper or lower half of the outer profile of the blade, taking into account its variations in shape, thickness, chord and twist over its length,

- locking the upper half-mould (100) onto the said lower half-mould (101), and

- placing the closed and charged mould in a heating oven and subjecting it to a polymerisation cycle during a single moulding operation, characterised in that the order in which the elements are placed in position is the same in both half-moulds (100, 101), only the counterweight (10), the front and rear cores (7, 8), the central rib (21) and the trailing edge tab (9) being placed in the lower half-mould (101), and that it consists in:

placing in position in succession, in each of the half-moulds (100, 101),

the outer layer (51, 61) of the corresponding covering (5, 6), firstly arranging in the bottom of the half-mould the layer or layers of cloth made of fibres impregnated with polymerisable resin having the fibres which are the least shock-resistant, when the outer layer comprises cloth made of fibres of different kinds,

hanks of rovings impregnated with polymerisable resin, forming one of the two complementary halves of the front spar (1) and, in the lower half-mould (101) the counterweight (10) in front of the said hanks in that half-mould (101),

hanks of rovings impregnated with polymerisable resin, and forming the corresponding bedding-plate (22, 23) of the central spar (2),

a reinforcing strip (94) for the trailing edge over the rear third of the outer layer (51, 61), the front (53, 63) and rear (54, 64) honeycomb panel of the corresponding covering (5, 6), arranged on the outer layer (51, 61), the first between the front half-spar (1) and the corresponding bedding-plate (22, 23) and the second behind the latter towards the trailing edge, after having applied a film of adhesive on each side of the two panels (53, 54; 63, 64), and the inner layer (52, 62) of the corresponding covering (5, 6), firstly arranging in the corresponding half-mould the layer or layers of cloth made of fibres impregnated with polymerisable resin having the fibres which are least shock-resistant, when the inner layer comprises cloth made of fibres of different kinds, and then

placing in position in the lower half-mould (101), the front core (7),

the central rib (21), forming the core of the centres spar (2)

the rear core (8), and the trailing edge tab (9), before turning the charged upper half-mould (100) over onto the charged lower half-mould (101) and closing the mould in order to carry out polimerisation.

Fig. 1

_Fig. 2_

_Fig. 3_